# EUROPÄISCHE PATENTANMELDUNG

(11) **EP 2 306 427 A1**
(43) Veröffentlichungstag der Anmeldung: **06.04.2011**
(21) Anmeldenummer: 09450187.1
(22) Anmeldetag: 01.10.2009
(51) Int. Cl.: G08G 1/04, G08G 1/052, G08G 1/056, G01B 11/25, G08G 1/015, G08G 1/017, G08G 1/14

(54) **Vorrichtungen und Verfahren zur Klassifizierung von Fahrzeugen**

(71) Anmelder: Kapsch TrafficCom AG, 1120 Wien (AT)
(72) Erfinder: Leopold, Alexander, 1100 Wien (AT); Schechora, Andreas, 2700 Wiener Neustadt (AT); Nagy, Oliver, 1190 Wien (AT)
(74) Vertreter: Weiser, Andreas

(57) **Zusammenfassung**

Die Erfindung betrifft die Detektion von Fahrzeugen (2) auf einer Verkehrsfläche (3), mit Hilfe eines nach dem Lichtschnitt-Verfahren arbeitenden, auf die Verkehrsfläche (3) gerichteten Sensors (4), um deren Oberflächenkontur zu erfassen, und einer an den Sensor (4) angeschlossene Auswerteeinrichtung (6), welche bei einer schwellwertüberschreitenden Änderung der erfaßten Oberflächenkontur ein Fahrzeug (2) detektiert.

## Beschreibung

Die vorliegende Erfindung betrifft eine Vorrichtung und ein Verfahren zur Detektion von Fahrzeugen auf einer Verkehrsfläche.

Das Detektieren von Fahrzeugen auf Verkehrsflächen ist Grundlage zahlreicher Verkehrsüberwachungs- und -vergebührungsanwendungen. So kann die statische Belegung von Verkehrsflächen wie Parkplätzen, Halteverbotszonen, Feuerwehrausfahrten usw. zu Vergebührungs- und Rechtsdurchsetzungszwecken notwendig sein. Eine Anwendung der Detektion der dynamischen Belegungen von Verkehrsflächen ist beispielsweise die Kreuzungsüberwachung, um bei Rotlicht in die Kreuzung einfahrende Fahrzeuge oder eine unzulässige Verstopfung ("grid locking") freizuhaltender Kreuzungsflächen ("yellow boxes") zu erkennen und zu ahnden. Bei Kreuzungsflächen ist oftmals auch eine differenzierte Auswertung der Fahrzeugbewegungen auf der Kreuzungsfläche erforderlich, wenn z.B. gesonderte Abbiegespuren für ein erlaubtes Rechtsabbiegen bei Rot vorgesehen sind.

Zur Fahrzeugdetektion derzeit verschiedenste Lösungen bekannt, wie die Verwendung von Lichtschranken, in die Fahrbahn eingebettete Induktionsschleifen, Radar- oder Laserscanner usw. Allen bekannten Systemen ist gemeinsam, daß sie überaus aufwendig sind: Induktionsschleifen erfordern ein Öffnen der Fahrbahnoberfläche, Lichtschranken benötigen Installationen an beiden Fahrbahnrändern, und Radar- bzw. Laserscanner sind konstruktiv aufwendig und kostspielig.

Die Erfindung setzt sich zum Ziel, eine Vorrichtung und ein Verfahren zur Detektion von Fahrzeugen auf einer Verkehrsfläche zu schaffen, welche einfacher realisierbar sind als die bekannten Lösungen, insbesondere, um kostengünstige Kreuzungs-und Parkplatzüberwachungssysteme aufzubauen.

Dieses Ziel wird in einem ersten Aspekt der Erfindung mit einer Vorrichtung erreicht, die sich durch einen nach dem Lichtschnitt-Verfahren arbeitenden, auf die Verkehrsfläche gerichteten Sensor, um deren Oberflächenkontur zu erfassen, und eine an den Sensor angeschlossene Auswerteeinrichtung auszeichnet, welche bei einer schwellwertüberschreitenden Änderung der erfaßten Oberflächenkontur ein Fahrzeug detektiert.

Auf diese Weise wird erstmals das in der Technik bekannte Lichtschnitt-Verfahren für die Fahrzeugdetektion eingesetzt. Lichtschnitt-Sensoren projizieren strukturiertes Licht, z.B. eine einzige Lichtlinie ("Lichtfächer" bzw. "Lichtstrich"), eine Vielzahl paralleler Lichtlinien ("Lichtfransen", sog. "fringe projection") oder gleich ein ganzes Lichtgitter unter einem ersten Winkel auf ein zu erfassendes Objekt und nehmen das Objekt mit der darauf projizierten Struktur aus einem von der Projektionsrichtung abweichenden Winkel auf, wodurch aus den Verzerrungen der Struktur im aufgenommenen Bild die Oberflächenkontur des Objekts ermittelt werden kann.

Die Vorrichtung der Erfindung erfordert keinerlei Einbauten in der Fahrbahn, kann auf lediglich einer einzigen Seite der Fahrbahn montiert werden und benötigt im Vergleich zu Radar- oder Laserscananlagen nur sehr einfache Lichtprojektions-, Kamera- und Bildverarbeitungsmittel.

Eine besonders vorteilhafte Ausführungsform der Erfindung zeichnet sich dadurch aus, daß die Auswerteeinrichtung in zeitlichen Abständen auf der Verkehrsfläche detektierte Fahrzeuge anhand charakteristischer Merkmale ihrer Oberflächenkontur wiedererkennt und bewegungsverfolgt. Dadurch können differenzierte Überwachungen der Verkehrsfläche durchgeführt werden, wie beispielsweise einer Kreuzungsfläche, auf der eine gerade Durchfahrt oder ein Linksabbiegen bei Rot verboten ist, jedoch ein Rechtsabbiegen auf einer Abbiegespur bei Rot gestattet sein soll. Derartige Bewegungen können mit Hilfe des erfindungsgemäßen Lichtschnitt-Verfahrens mit verhältnismäßig einfachen Bildverarbeitungsmitteln detektiert werden.

Bevorzugt steuert die Auswerteeinrichtung im Falle einer Fahrzeugdetektion und/oder einer unzulässigen Fahrzeugbewegung einen Sensor oder weitere Einrichtungen, bevorzugt eine Kamera zur photographischen Aufnahme der Verkehrsfläche, an. Diese Ausführungsform erfüllt die Datenschutzanforderungen moderner Verkehrsüberwachungssysteme, weil gewährleistet ist, daß nur dann ein Photo eines Fahrzeugs geschossen wird, wenn ein Vergehen vorliegt; umgekehrt werden von Fahrzeugen mit zulässigen Fahrzeugbewegungen keine Aufnahmen gemacht, d.h. ihre Bewegungsverfolgung ("tracking") erfolgt vollkommen anonym.

In einer ersten vorteilhaften Variante der Erfindung ist demgemäß die Verkehrsfläche eine Kreuzung und die Kamera eine Verkehrsüberwachungskamera der Kreuzung, und bevorzugt die Verkehrsfläche eine Abbiegespur der Kreuzung.

In einer zweiten bevorzugten Variante der Erfindung ist die Verkehrsfläche ein Parkplatz und die Vorrichtung weist eine Sendeeinrichtung zur Fernanzeige der Parkplatzbelegung an eine Zentrale auf. Der Parkplatz kann z.B. Abstellflächen für mehrere Fahrzeuge enthalten, sodaß beispielsweise mit einer einzigen erfindungsgemäßen Vorrichtung die Belegung eines größeren Parkplatzes, z.B. eines Supermarktes oder eines Gebührenparkplatzes mit vielen Abstellplätzen, überwacht werden kann.

Der gemäß dem Lichtschnittverfahren arbeitende Sensor umfaßt bevorzugt zumindest einen Lichtmusterprojektor, der von einem ersten Ort aus ein Lichtmuster, bevorzugt Lichtgitter, auf die Verkehrsfläche projiziert, sowie eine Kamera, die von einem zweiten Ort aus das projizierte Lichtmuster aufnimmt und aus dessen Verzerrungen die Oberflächenkontur erfaßt, wie in der Technik bekannt.

Besonders günstig ist es, wenn der Lichtmusterprojektor ein Laser- oder Leuchtdiodenstrahler ist, wodurch hohe Leuchtdichten erzielt werden können.

Eine besonders vorteilhafte Ausführungsform der Erfindung zeichnet sich dadurch aus, daß der Lichtmusterprojektor zusätzlich eine Lichtmarkierung projiziert, welche die Kamera mit aufnimmt. Bevorzugt ist die Lichtmarkierung eine Beschriftung und/oder ein maschinenlesbarer Code, bevorzugt ein Strichcode ("Barcode"). Dadurch kann die Auswertung der Kamerabilder wesentlich erleichtert werden: Die Lichtmarkierung kann beispielsweise einzelne Lichtlinien des Lichtmusters kennzeichnen, um deren automatische Detektion im Kamerabild zu erleichtern; die Lichtmarkierung kann zu diesem Zweck auch direkt in das Lichtmuster bzw. dessen Linien integriert sein. Anderseits kann die Lichtmarkierung in besonders vorteilhafter Weise auch zu Beweiszwecken in der Verkehrsüberwachung und -kontrolle dienen, z.B. wenn sie Aufnahmeort und -zeit des Kamerabildes angibt: Damit können Ort und Zeit eines Verkehrsvergehens in das aufgenommene Bild "hineinprojiziert" werden, was hohe Beweiskraft für das Bild hat. Dafür eignet sich sowohl eine menschenlesbare Beschriftung als auch ein entsprechender maschinenlesbarer Code, welcher solche Daten enthält.

Es können durch die Beleuchtung von mehreren Lichtquellen aus verschiedenen Orten und die integrierte Codierung der Quelle in die Projektion mehrere "Lichtvorhänge" realisiert werden, um damit den Ort der Unterbrechung des jeweiligen Lichtstrahls exakt zu bestimmen. Dadurch können beispielsweise Abschattungen reduziert werden.

In einem weiteren Aspekt erreicht die Erfindung ihre Ziele mit einem Verfahren zur Detektion von Fahrzeugen auf einer Verkehrsfläche, mit den Schritten

Projizieren eines Lichtmusters, bevorzugt Lichtgitters, auf die Verkehrsfläche von zumindest einem ersten Ort aus,
Aufnehmen des projizierten Lichtmusters von einem zweiten Ort aus, um die Oberflächenkontur der Verkehrsfläche aus Verzerrungen des Lichtmusters zu erfassen, und

Detektieren eines Fahrzeugs, wenn die erfaßte Oberflächenkontur eine schwellwertüberschreitende Änderung zeigt.

Hinsichtlich der Vorteile und weiterer Merkmale der erfindungsgemäßen Verfahren wird auf die obigen Ausführungen zu den Vorrichtungen der Erfindung verwiesen.

Die Erfindung wird nachstehend anhand von in den beigeschlossenen Zeichnungen dargestellten Ausführungsbeispielen näher erläutert. In den Zeichnungen zeigen:
Fig. 1 die Vorrichtung und das Verfahren der Erfindung zur Detektion von Fahrzeugen auf einer Verkehrsfläche anhand einer schematischen Perspektivansicht der Vorrichtung;
Fig. 2 eine Anwendung der Vorrichtung von Fig. 1 zur Kreuzungsüberwachung in einer Draufsicht auf die Kreuzung;
Fig. 3 zwei zeitlich aufeinanderfolgende Aufnahmen des auf die Kreuzung projizierten Lichtmusters beim Einfahren eines Fahrzeugs in die Kreuzung;
Fig. 4 eine alternative Ausführungsform der Vorrichtung und des Verfahrens zur Überwachung einer Kreuzung mit Abbiegespuren;
Fig. 5 vier zeitlich aufeinanderfolgende Aufnahmen des auf eine Abbiegespur projizierten Lichtmusters während des Abbiegevorgangs eines Fahrzeugs; und
Fig. 6 eine weitere Ausführungsform der Vorrichtung und des Verfahrens der Erfindung zur Überwachung eines Parkplatzes anhand einer schematischen Perspektivansicht der Vorrichtung.

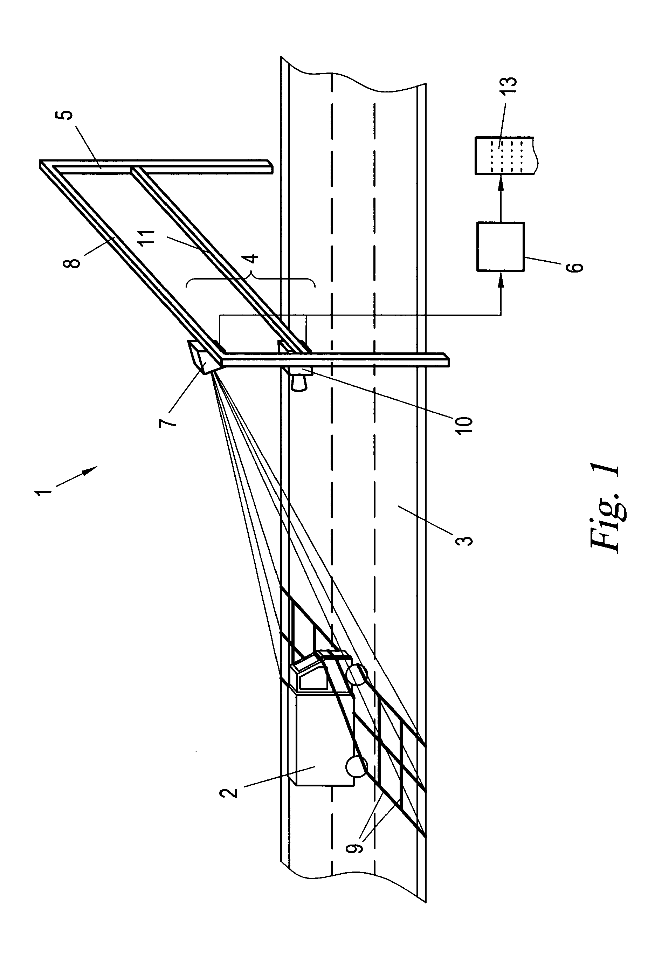

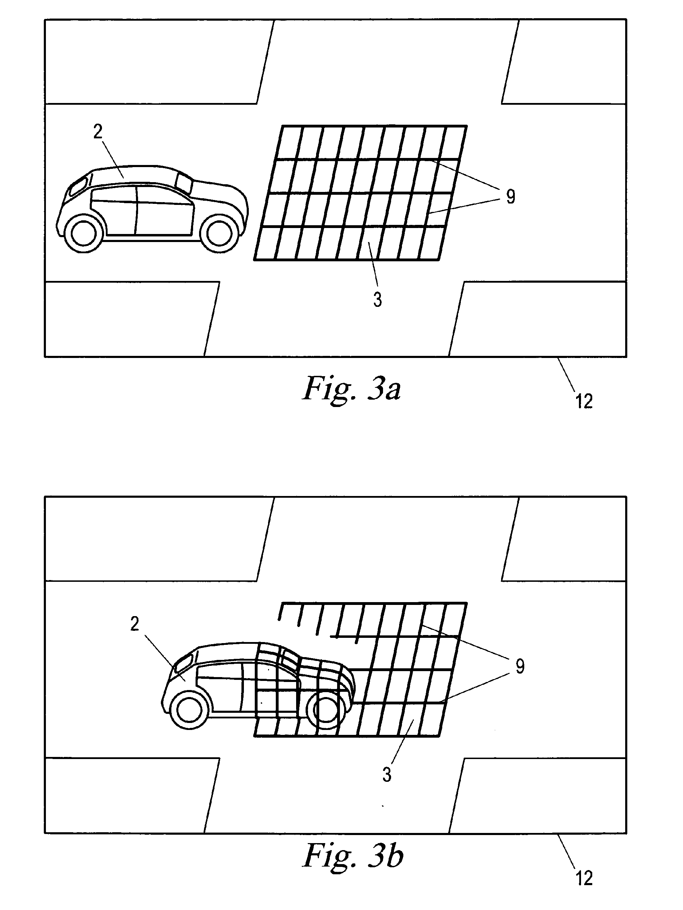

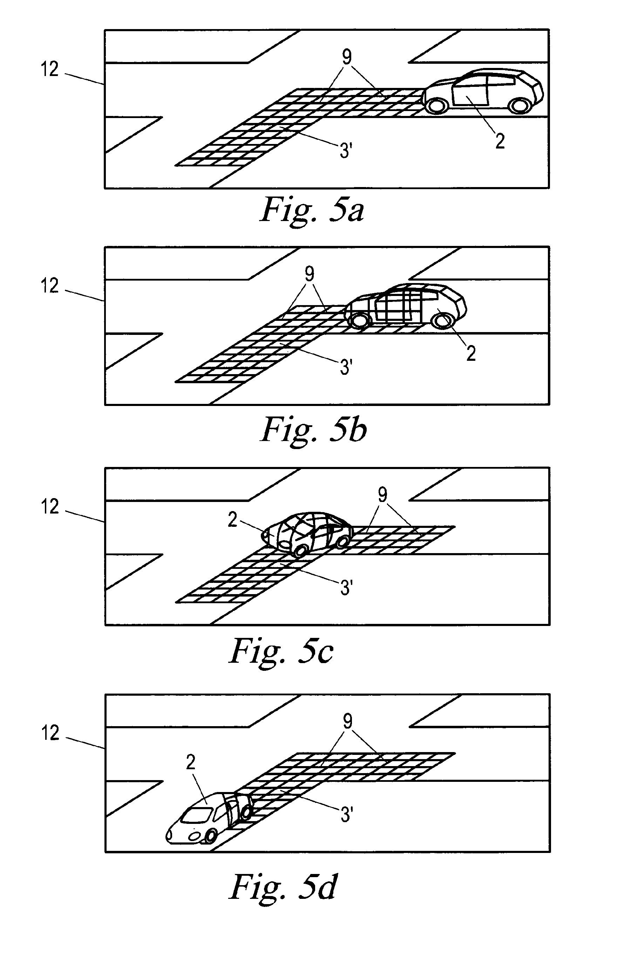

In Fig. 1 ist eine Vorrichtung 1 zur Detektion eines Fahrzeugs 2 auf einer Verkehrsfläche 3 gezeigt. Die Vorrichtung 1 weist einen nach dem Lichtschnitt-Verfahren arbeitenden Sensor 4 auf, der an einem die Fahrbahn 3 überspannenden Brückenträger 5 montiert und an eine Auswerteeinrichtung 6 angeschlossen ist. Der Sensor 4 umfaßt einerseits einen Lichtmusterprojektor 7, der von einem ersten Ort - hier einem oberen Träger 8 der Brücke 5 - ein Lichtmuster 9 auf die Fahrbahn 3 projiziert, und anderseits eine Kamera 10, welche von einem zweiten Ort aus - hier einem unteren Träger 11 der Brücke 5 - ein Bild 12 des projizierten Lichtmusters 9 aufnimmt, wie es z.B. in Fig. 3 und 5 für verschiedene aufeinanderfolgende Zeitpunkte gezeigt ist.

Zu jedem dieser Zeitpunkte ermittelt die Auswerteeinrichtung 6 aus den Verzerrungen des Lichtmusters 9 im Bild 12, wie sie durch das Oberflächenrelief eines Fahrzeugs 2 aus dem von der Lichtprojektionsrichtung abweichenden Blickwinkel der Kamera 8 auftreten, die Oberflächenkontur der Verkehrsfläche 3 bzw. eines allfällig sich darauf befindenden Fahrzeugs 2.

Durch Kalibrieren der Auswerteeinrichtung 6 auf den "leeren" bzw. "unbelegten" Zustand der Verkehrsfläche 3, wenn sich kein Fahrzeug 2 auf der Verkehrsfläche 3 befindet, kann aus einer einen vorgegebenen Schwellwert überschreitenden Änderung bzw. Abweichung der erfaßten Oberflächenkontur am "leeren" Zustand die Anwesenheit eines Fahrzeugs 2 auf der Verkehrsfläche 3 detektiert werden.

Das Lichtmuster 9 kann sowohl eine einzelne Lichtlinie ("Lichtstrich"), eine Gruppe paralleler Lichtlinien ("Lichtfransen", "fringe projection") als auch ein Lichtgitter sein. Wie aus Fig. 3 ersichtlich, kann das Lichtmuster 9 beispielsweise aus einem Gitter von jeweils um 1 m beabstandeten Lichtlinien bestehen. Auch andere Arten von Lichtmustern 9 sind möglich, beispielsweise Rauten- oder Kreismuster.

Als Lichtmusterprojektor 7 kann jede Art von Lichtquelle eingesetzt werden, welche in der Lage ist, das Lichtmuster 9 auszusenden. Besonders eignen sich hiefür Laserdiodenstrahler, deren Licht z.B. mit Linsen oder Blenden aufgefächert wird, oder Strahler, die aus Hochleistungs-Leuchtdiodengruppen zusammengesetzt sind.

Besonders günstig ist es, wenn der Lichtmusterprojektor 7 in einem schmalbandigen Lichtfrequenzbereich, insbesondere im infraroten oder ultravioletten Bereich, abstrahlt und die Kamera 10 nur für diesen Lichtfrequenzbereich empfindlich ist, um Störungen durch Fremdlichteinflüsse zu minimieren.

Um den Kontrast des vom Lichtmusterprojektor 7 projizierten Lichtmusters 9 auch bei ungünstigen Umgebungslichtverhältnissen, z.B. direktem Sonnenlicht, zu verbessern, kann der Lichtmusterprojektor 7 optional gepulst und mit hoher Impulsspitzenleistung betrieben werden, wobei dann auch die Kamera 10 nur zu den Zeiten der Lichtimpulse des Lichtmusterprojektors 7 betrieben zu werden braucht.

Die Kamera 10 kann eine beliebige Foto- oder Videokamera sein. Bevorzugt wird als Kamera 10 eine bereits an der Fahrbahn 3 vorhandene Verkehrsüberwachungskamera eingesetzt, z.B. eine Kamera einer Straßenmautstation, welche zum Aufnehmen von Mautvergehen bestimmt ist.

Der bzw. die Lichtmusterprojektoren 7 und die Kamera 10 können an beliebigen unterschiedlichen Positionen angeordnet werden, solange das projizierte Lichtmuster 9 aus einer von seiner Projektionsrichtung abweichenden Richtung aufgenommen wird. Auch ist es möglich, mehr als einen Lichtmusterprojektor 7 an verschiedenen Positionen anzuordnen, z.B. um die Fahrbahn 3 bzw. das Fahrzeug 2 aus unterschiedlichen Winkeln zu beleuchten, um Abschattungen zu vermeiden. Dabei kann das Lichtmuster 9 auch aus den Projektionen mehrerer Lichtmusterprojektoren 7 zusammengesetzt sein, die beispielsweise kreuzende Scharen paralleler Lichtlinien ("Lichtfransen") auf die Fahrbahn projizieren. Damit die Kamera 10 bzw. die Auswerteeinrichtung 6 die Lichtlinien im Bild 12 den einzelnen Lichtmusterprojektoren korrekt zuordnen kann, werden die Scharen beispielsweise mit unterschiedlichen Wellenlängen im Zeitmultiplex oder mit verschiedenen Modulationen oder Codierungen versehen ausgestrahlt, wie in der Technik bekannt.

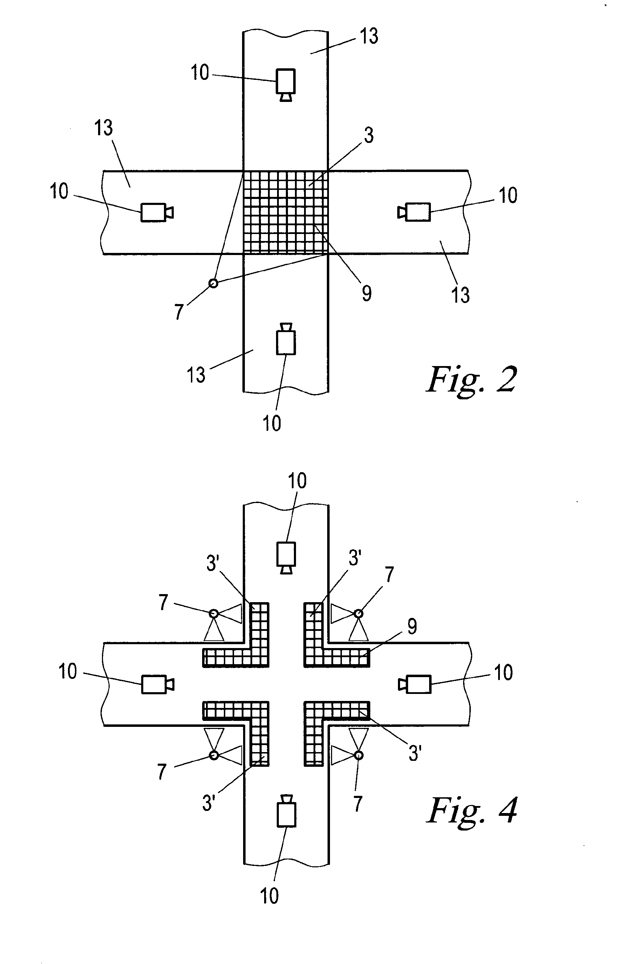

Fig. 2 zeigt die Anwendung des Lichtschnitt-Sensors und Verfahrens zur Überwachung einer Verkehrsfläche 3 in Form der mittleren Kreuzungsfläche einer Kreuzung. Auf die Fläche 3 wird ein gitterförmiges Lichtmuster 9 von einem (hier nicht dargestellten) Lichtmusterprojektor 7 projiziert, und mehrere an den in die Kreuzung einmündenden Straßen 13 positionierte Kameras 10 nehmen jeweils das Lichtmuster 9 aus einem anderen Winkel auf.

Die Fig. 3a und 3b zeigen beispielhaft eine Aufnahme des auf die Verkehrsfläche 3 projizierten Lichtmusters 9 mit einer Kamera 10, und zwar einmal bei "leerer" Verkehrsfläche 3 (Fig. 3a) und einmal bei "belegter" Verkehrsfläche 3, d.h. beispielsweise bei unzulässiger Einfahrt eines Fahrzeugs 2 in der Kreuzung bei Rot. Aus der schwellwertüberschreitenden Änderung der erfaßten Oberflächenkontur (siehe Fig. 3b) wird auf die Anwesenheit eines Fahrzeugs 2 auf der Verkehrsfläche 3 geschlossen. Die Vorrichtung 1 kann dann weitere Maßnahmen setzen, wie die Abgabe eines Alarms oder das Auslösen einer photographischen Aufnahme der Verkehrsfläche 3 mitsamt dem Fahrzeug 2. Bevorzugt werden dazu dieselben Kameras 10 herangezogen, welche bereits Teil des Lichtschnitt-Sensors 4 sind.

Die Fig. 4 und Fig. 5 zeigen eine weitere Anwendung der Vorrichtung und des Verfahrens der Erfindung zur Überwachung der Abbiegespuren 3' einer Kreuzung, wobei jeweils gesonderte Lichtmusterprojektoren 7 an den Abbiegespuren 3' angebracht werden. Aus den erfaßten Oberflächenkonturen allfälliger detektierter Fahrzeuge 2 können charakteristische Merkmale der Fahrzeuge abgeleitet werden, wie Größe, Form usw. Dadurch können in zeitlich aufeinanderfolgenden Aufnahmen 12, wie sie in den Fig. 5a bis 5d dargestellt sind, gleiche Fahrzeuge 2 anhand charakteristischer Merkmale ihrer Oberflächenkontur wiedererkannt und in ihrer Bewegung verfolgt werden. Dadurch kann z.B. festgestellt werden, ob ein bestimmtes Fahrzeug 2 eine Abbiegespur 3' in zulässiger Art und Weise benützt oder aber unzulässig bei Rot über eine Kreuzung fährt.

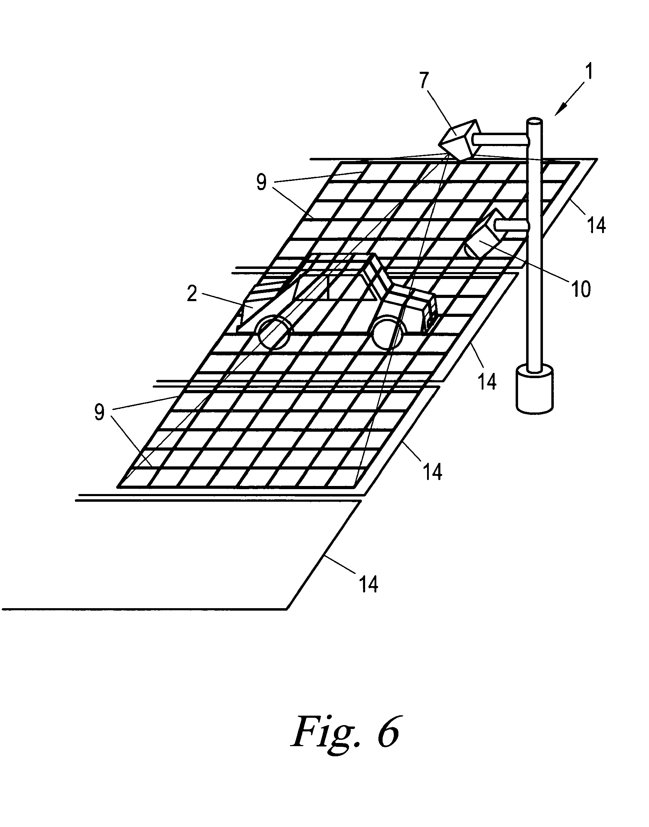

Fig. 6 zeigt eine alternative Anwendung der Vorrichtung 1 zur Überwachung der Belegung von Stellplätzen 14 einer Verkehrsfläche 3 in Form eines Parkplatzes. Mit einer einzigen Vorrichtung 1 können gleich mehrere Stellplätze 14 auf Belegung, d.h. Anwesenheit eines Fahrzeugs 2, überwacht werden. Beispielsweise kann mit Hilfe einiger weniger, an verteilten Masten montierter Vorrichtungen 1 die gesamte Fläche eines Supermarkt- oder Gebührenparkplatzes auf Belegung der einzelnen Stellplätze 14 überwacht werden.

Die Detektion der Anwesenheit eines Fahrzeugs 2 auf der Fahrbahn 3 kann herangezogen werden, um weitere Aktionen auszulösen, z.B. die Aufnahme eines Photos des detektierten Fahrzeugs 2 mit der Kamera 10.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Vorrichtung (1) zur Detektion von Fahrzeugen (2) auf einer Verkehrsfläche (3, 3', 3"), **gekennzeichnet durch** einen nach dem Lichtschnitt-Verfahren arbeitenden, auf die Verkehrsfläche (3, 3', 3") gerichteten Sensor (4), um deren Oberflächenkontur zu erfassen, und eine an den Sensor (4) angeschlossene Auswerteeinrichtung (6), welche bei einer schwellwertüberschreitenden Änderung der erfaßten Oberflächenkontur ein Fahrzeug (2) detektiert.

2. Vorrichtung (1) nach Anspruch 1, **dadurch gekennzeichnet, daß** die Auswerteeinrichtung (6) in zeitlichen Abständen auf der Verkehrsfläche (3, 3', 3") detektierte Fahrzeuge (2) anhand charakteristischer Merkmale ihrer Oberflächenkontur wiedererkennt und bewegungsverfolgt.

3. Vorrichtung (1) nach Anspruch 1 oder 2, **dadurch gekennzeichnet, daß** die Auswerteeinrichtung (6) im Falle einer Fahrzeugdetektion und/oder einer unzulässigen Fahrzeugbewegung einen Sensor oder weitere Einrichtungen, bevorzugt eine Kamera (10) zur photographischen Aufnahme der Verkehrsfläche (3, 3', 3"), ansteuert.

4. Vorrichtung (1) nach Anspruch 3, **dadurch gekennzeichnet, daß** die Verkehrsfläche (3) eine Kreuzung und die Kamera (10) eine Verkehrsüberwachungskamera der Kreuzung ist.

5. Vorrichtung (1) nach Anspruch 4, **dadurch gekennzeichnet, daß** die Verkehrsfläche (3') eine Abbiegespur der Kreuzung ist.

6. Vorrichtung (1) nach einem der Ansprüche 1 bis 3, **dadurch gekennzeichnet, daß** die Verkehrsfläche (3") ein Parkplatz ist und die Vorrichtung (1) eine Sendeeinrichtung zur Fernanzeige der Parkplatzbelegung an eine Zentrale aufweist.

7. Vorrichtung (1) nach einem der Ansprüche 1 bis 6, **dadurch gekennzeichnet, daß** der Sensor (4) zumindest einen Lichtmusterprojektor (7), der von einem ersten Ort aus ein Lichtmuster (9), bevorzugt Lichtgitter, auf die Verkehrsfläche (3, 3', 3") projiziert, sowie eine Kamera (10) umfaßt, die von einem zweiten Ort aus das projizierte Lichtmuster (9) aufnimmt und aus dessen Verzerrungen die Oberflächenkontur erfaßt.

8. Vorrichtung (1) nach Anspruch 7, **dadurch gekennzeichnet, daß** der Lichtmusterprojektor (7) ein Laser- oder Leuchtdiodenstrahler ist.

9. Vorrichtung (1) nach einem der Ansprüche 7 bis 9, **dadurch gekennzeichnet, daß** der Lichtmusterprojektor (7) zusätzlich eine Lichtmarkierung projiziert, welche die Kamera (10) mit aufnimmt.

10. Vorrichtung (1) nach Anspruch 9, **dadurch gekennzeichnet, daß** die Lichtmarkierung (9) eine Beschriftung und/oder ein maschinenlesbarer Code ist, bevorzugt ein Strichcode.

11. Verfahren (1) zur Detektion von Fahrzeugen (2) auf einer Verkehrsfläche (3, 3', 3"), mit den Schritten
Projizieren eines Lichtmusters (9), bevorzugt Lichtgitters, auf die Verkehrsfläche (3, 3', 3") von zumindest einem ersten Ort aus,
Aufnehmen des projizierten Lichtmusters (9) von einem zweiten Ort aus, um die Oberflächenkontur der Verkehrsfläche (3, 3', 3") aus Verzerrungen des Lichtmusters (9) zu erfassen, und
Detektieren eines Fahrzeugs (2), wenn die erfaßte Oberflächenkontur eine schwellwertüberschreitende Änderung zeigt.

12. Verfahren (1) nach Anspruch 11, **dadurch gekennzeichnet, daß** auf der Verkehrsfläche (3, 3', 3") detektierte Fahrzeuge (2) anhand charakteristischer Merkmale ihrer Oberflächenkontur wiedererkannt und bewegungsverfolgt werden, um unzulässige Fahrzeugbewegungen auf der Verkehrsfläche (3, 3', 3") zu ermitteln.

13. Verfahren (1) nach Anspruch 11 oder 12, **dadurch gekennzeichnet, daß** im Falle einer Fahrzeugdetektion und/oder einer unzulässigen Fahrzeugbewegung eine photographische Aufnahme der Verkehrsfläche (3, 3', 3") gemacht wird.

14. Verfahren nach Anspruch 13, **dadurch gekennzeichnet, daß** für die photographische Aufnahme dieselbe Kamera (10) verwendet wird, mit welcher das projizierte Lichtmuster (9) aufgenommen wird, bevorzugt eine Verkehrsüberwachungskamera.

15. Verfahren (1) nach Anspruch 13 oder 14, **dadurch gekennzeichnet, daß** zusätzlich zu dem Lichtmuster (9) eine Lichtmarkierung auf die Verkehrsfläche (3, 3', 3") projiziert wird, welche von der Kamera (10) mit aufgenommen wird.
